# EUROPEAN PATENT APPLICATION

(11) **EP 2 608 479 A1**
(43) Date of publication of application: **26.06.2013**
(21) Application number: 11306772.2
(22) Date of filing: 23.12.2011
(51) Int. Cl.: H04L 29/06

(54) **Method of communication between at least a first device requesting an execution of a remote function by a second device capable of executing the remote function**

(71) Applicant: France Télécom, 75015 Paris (FR)
(72) Inventor: Dabrowski, Marek, 02-976 WARSAW (PL); Golabek, Piotr, 02-795 WARSAW (PL); Gromada, Justyna, 01-990 WARSAW (PL)

(57) **Abstract**

The invention relates to a method of communication between at least a first device requesting an execution of a remote function by a second device capable of executing the remote function, the first and the second devices being part of a communication network, the method comprising the steps of :
- transmitting to the second device, a message for establishing a bidirectional communication session between the first device and the second device, the message for establishing the bidirectional communication session comprising a parameter indicating that the messages exchanged during the communication session are messages related to the execution of the remote function having a specific format,
- receiving unsolicited messages related to the execution of the remote function sent by the second device.

## Description

The present invention generally relates to the execution of remote functions in a communication network.

SOAP (Simple Object Access Protocol) is a protocol belonging the family of protocols called RPC (Remote Procedure Call). RPC protocols enables a computer program, or an application, embedded in a first device to request the execution of a subroutine by a second device, without the programmer of the computer program explicitly coding the details for this remote execution.

RPC protocols are initiated by a client embedded in the first device, which sends a request message to a known remote server, which is embedded in the second device, to execute a specified procedure with supplied parameters. The remote server of the second device sends a response to the client of the first device, and the application continues its process.

While the server is processing the message sent by the client, the client waits until the server has finished processing the message before resuming execution, unless the client sends an asynchronous request to the server, such as an XHTTP call.

SOAP is a protocol capable of exchanging structured information in the implementation of Web Services in communication networks. SOAP relies on XML (Extensible Markup Language) for its message format, and usually relies on other Application Layer protocols, such as HTTP (Hypertext Transfer Protocol), for message negotiation and transmission. SOAP can form the foundation layer of a web services protocol stack, providing a basic messaging framework upon which web services can be built.

A SOAP message consists of three parts: an envelope, which defines what is in the SOAP message and how to process it, a set of encoding rules for defining the data to be transmitted in the SOAP message, and a convention for representing procedure calls and responses.

SOAP messages are exchanged between the client of the first device and the server of the second device over a transport protocol such as HTTP.

When the fist device embedding the client, needs, while running a specific application, to invoke a remote function, the client sends a request to the server embedded in the second device. This request is an HTTP request comprising a SOAP message requesting the execution of the remote function. The SOAP message comprises the request, and the parameters intended to be used by the function when it will be executed. Upon reception of the HTTP request, the server will extract the parameters and transmit them to the module of the second device that will execute the remote function. Once the function is executed, the result of this execution is transmitted to the client in an HTTP response.

Thus, it is not possible for the server to send messages to the client without having previously received a request from the client.

This is an important drawback of the SOAP over HTTP because SOAP over HTTP only support request-response communication. Indeed, the execution of the remote function triggers events that should be notified immediately to the client. But since the client does not send an HTTP request to the server, these events cannot be reported to the client. The consequences are a decrease in the quality of experience of the user of the first device and difficulty to develop sort of applications in which the client has to be immediately notified by the server of certain events.

It is an objective of the present invention to overcome disadvantages and/or make improvements in the prior art.

To that extend, the present invention relates to a method of communication between at least a first device requesting an execution of a remote function by a second device capable of executing the remote function, the first and the second devices being part of a communication network, the method comprising the steps of :
- transmitting to the second device, a message for establishing a bidirectional communication session between the first device and the second device, the message for establishing the bidirectional communication session comprising a parameter indicating that the messages exchanged during the communication session are messages related to the execution of the remote function having a specific format,
- receiving unsolicited messages related to the execution of the remote function sent by the second device.

Such a method enables the reception by a client, embedded in the first device, of unsolicited messages by a server embedded in the second device.

This is made possible by the establishment of a specific communication session between the first and the second device. Even though this specific communication session still relies on the client-server architecture, it does not rely on the request-response model. This allows the transmission of unsolicited messages from the server to the client, enhancing the reactivity of the exchanges between the first and second devices.

The request for the execution of the remote function is a SOAP message. The communication session is established according to WebSocket protocol. Thus the communication session established between the first and second devices is a WebSocket communication session.

The message for establishing the communication session sent by the first device is an handshake message, i.e. a message to establish a WebSocket session, comprising a parameter indicating that the data to be transmitted through WebSocket communication session to be established are SOAP messages.

Such a method solves the problems of SOAP over HTTP as allows asynchronous messages to be sent to the first device by the second device executing the remote function.

The invention concerns as well a method for controlling a communication session established between at least a first device requesting an execution of a remote function by a second device capable of executing the remote function, the first and the second devices being part of a communication network, the method comprising the steps of :
- receiving a message for establishing a bidirectional communication session between the first device and the second device, the message for establishing the bidirectional communication session comprising a parameter indicating that the messages exchanged during the communication session are messages related to the execution of the remote function having a specific format,
- storing a first parameter identifying the communication session and a second parameter identifying the remote function to be executed,
- transmitting messages related to the execution of the remote function to the first device, the first device being identified by the first and second parameters.

Storing parameters identifying the communications sessions and the remote functions for which a request of execution is received allows the second device to identify the device, in the communication network, to which a message, solicited or unsolicited, must be sent. The second device can handles several communication sessions with the same or different devices.

Another object of the invention is a device, being part of a communication network, requesting an execution of a remote function by another device capable of executing the remote function being part of the communication network, the device comprising :
- means for transmitting to the other device, a message for establishing a bidirectional communication session between the device and the other device, the message for establishing the bidirectional communication session comprising a parameter indicating that the messages exchanged during the communication session are messages related to the execution of the remote function having a specific format,
- means for receiving unsolicited messages related to the execution of the remote function sent by the other device.

Such a device comprises a client capable of requesting the execution of the remote function.

The invention also deals with a device, being part of a communication network, controlling a communication session established between the device and at least another device requesting an execution of a remote function by the device capable of executing the remote function, the device comprising:
- means for receiving a message for establishing a bidirectional communication session between the other device and the device, the message for establishing the bidirectional communication session comprising a parameter indicating that the messages exchanged during the communication session are messages related to the execution of the remote function having a specific format,
- means for storing a first parameter identifying the communication session and a second parameter identifying the remote function to be executed,
- means for transmitting messages related to the execution of the remote function to the other device, the other device being identified by the first and second parameters.

Such a device comprises a server capable of sending responses to the requests sent by the client of the other device but also capable of sending unsolicited messages to the client.

Another object of the invention is a communication system comprising at least a first device requesting an execution of a remote function by a second device capable of executing the remote function, the first device comprising :
- means for transmitting to the second device, a message for establishing a bidirectional communication session between the first device and the second device, the message for establishing the bidirectional communication session comprising a parameter indicating that the messages exchanged during the communication session are messages related to the execution of the remote function having a specific format,
- means for receiving unsolicited messages related to the execution of the remote function sent by the second device,
   the second device comprising :
- means for receiving the message for establishing the bidirectional communication session between the first device and the second device,
- means for storing a first parameter identifying the communication session and a second parameter identifying the remote function to be executed,
- means for transmitting the messages related to the execution of the remote function to the first device, the first device being identified by the first and second parameters.

Finally, another object of the invention concerns computer programs, in particular computer programs on or in an information medium or memory, suitable for implementing the methods object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

The present system and method are explained in further detail, and by way of example, with reference to the accompanying drawings wherein:
FIG. 1 represents a system, in which the method of communication of the invention is executed,
FIG. 2 represents the steps of a communication method executed in the system described in reference to figure 1,
FIG. 3 represents a first embodiment of the invention,
FIG. 4 represents a first embodiment of the invention,
FIG. 5 represents a client module according to the invention,
FIG. 6 represents a server module according to the invention.

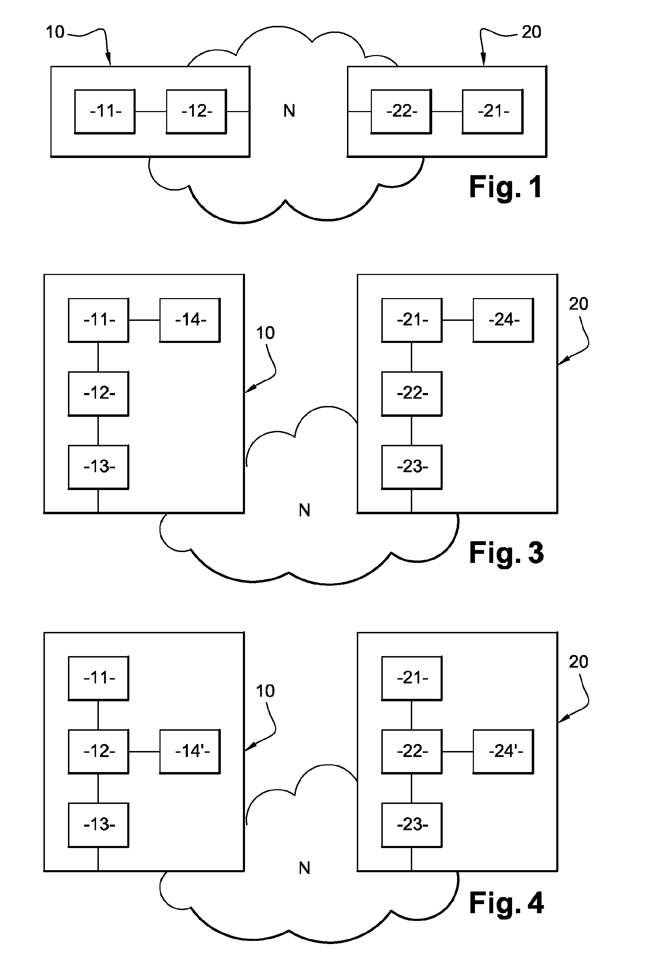

Figure 1 represents a system in which the method of communication of the invention is executed.

A first device 10 is connected to a communication network N. The communication network N is for example the internet. A second device 20 is connected to the communication network N.

The first device 10 is for example a personal computer, or more generally any type of device embedding applications, such as a weather forecast application. The first device comprises a client 11. The client 11 is the client of the application. The client 11 is connected to a client module 12. The client module 12 is the interface between the first device 10 and the network N.

The second device 20 comprises an application server 21 embedding a plurality of remote functions. The remote functions are executed by the application server 21. The application server is connected to a server module 22 being part of the second device 20. The server module 22 is the interface between the second device 20 and the network N.

In order to provide a service to the user of the first device 10, the application sometimes need to have a specific function executed. Such a function can be embedded in another device, typically the second device 20, and is called a remote function.

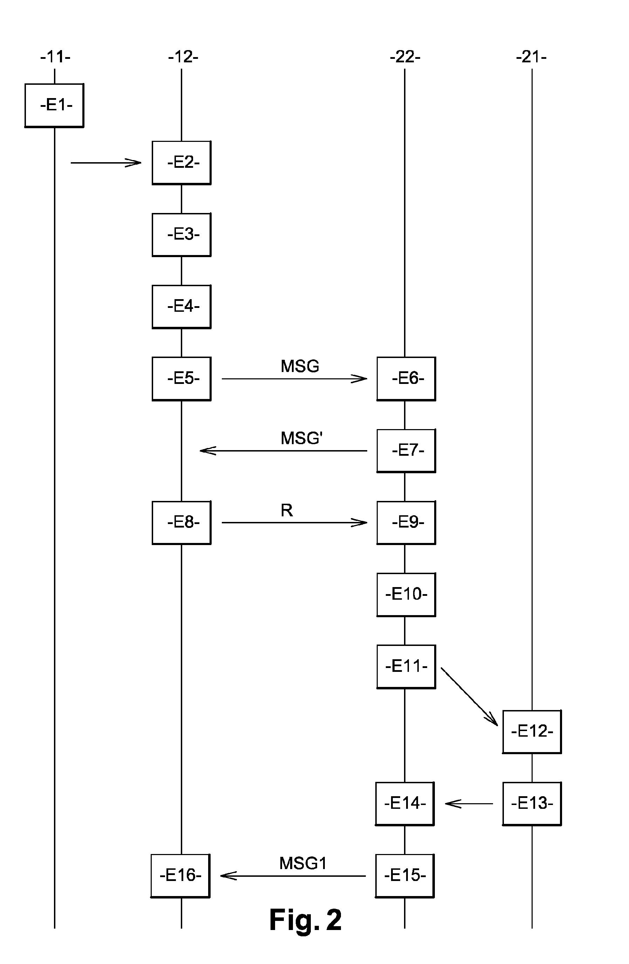

Figure 2 represents the steps of a communication method executed in the system described in reference to figure 1.

In a step E1, the client 11 of the application sends a request to the client module 11 asking for the execution of a remote function embedded in the second device 20.

In a step E2, the module client 12 receives the request of the client 11. During step E3, the client module 12 generates a request R for the execution of the remote function. Such a request R is compliant with SOAP. In other words, the request for the execution of the remote function is a SOAP message. The request R comprises a parameter identifying the remote function to be executed, a set of parameters necessary for the execution of the remote function, and parameter indicating that the SOAP message R generated is a request for the execution of a remote function. The information comprised in the request R are received from the client 11.

Once the request R is generated, the client module 12 establishes a communication session CS with the server module 22 of the second device 20 embedding the remote function to be executed, during a step E4.

In order to establish the communication session CS with the server module 22, the client module 12 generates a message MSG for establishing a communication session CS. The message MSG is compliant with WebSocket Protocol. In other words, the message MSG is a WebSocket message and more particularly the message MSG is a handshake message.

The message MSG comprises a parameter identifying the client module 12, a parameter identifying the server module 22, and a parameter indicating the format of the data that will be transmitted between the client module 12 and the server module 22 during the communication session CS. Here, the parameter indicating the format of the data is SOAP, meaning that during the communication session CS, only SOAP messages will be exchanged between the client module 12 and the server module 22.

In a step E5 the client module 12 sends the handshake message MSG to the server module 22.

In a step E6, the server module 22 receives the handshake message MGS.

In a step E7, the server module 22 sends a handshake message MSG' to the module client 11 terminating the establishment of the communication session CS.

Upon reception the handshake message MSG', the client module 12 sends the request R for execution of the remote function to the server module 22 in a step E8. Thus, a SOAP message is sent through a communication session CS compliant with WebSocket.

In a step E9, the server module 22 receives the request R.

In a step E10, the server module 22 creates an entry in a table T for the communication session CS. The server module 22 stores a parameter identifying the communication session CS and the parameter indentifying the remote function to be executed in the corresponding entry of the table T.

In a step E11, the server module 22 transmits the request for execution of the remote function and the set of parameters necessary for the execution of the remote function to the server 21.

During a step E12, the server 21 executes the remote function. During the execution of the remote function, the server 21 sends messages comprising results of the execution of the remote function to the server module 21. A result of the execution of the remote function is for example, if the application embedded in the first device 10 is a weather forecast application, an update of the weather forecast for a given location. Those messages can be sent at different moment in time, and sometimes the duration between the transmission of two consecutive messages is a few minutes.

In a step E13, the server 21 sends the results of the execution of the remote function to the server module 22. In a step E14, the server module 22 generates a SOAP message MSG1 comprising the results of the execution of the remote function. The message MSG1 comprises also the parameter identifying the communication session and the parameter identifying the remote function to be executed stored in the table T.

In a step E15, the message MSG1 is sent to the client module 12. The server module 22 does not need to receive a request from client module 12 to transmit the message MSG1. Every time the server module receives results of the execution of the remote function from server 21, the server module 22 generates a SOAP message MSG1 comprising the results of the execution of the remote function and sends it to the client module 12.

Thus, the server module 22 sends unsolicited messages MSG1 to the client module 21. Even though the communication session CS still relies on the client-server architecture, it does not rely on the request-response model. This allows the transmission of unsolicited messages from the server module 22 to the client module 12.

Upon reception of the message MSG1, the client module 12 extract the result of the execution of the remote function from the message MSG1 and transmits the results of the execution of the remote function to the client 11 during step E16.

A communication session CS is associated with the client 11 which is associated with a specific application. If the application needs the execution of a plurality of remote functions to provide a service to the user of the first device 10, all the messages requesting the execution of these remote functions will be transmitted to the server module 22 during the same communication session CS.

In order to discriminate between the different messages transmitted during the communication session CS, the server module creates an entry in the table T for each couple parameter identifying the communication session CS / parameter identifying the remote function to be executed.

In a first embodiment of the invention represented on figure 3, the first device 10 comprises a client 11. The client 11 is the client of the application. The client 11 is connected to a SOAP library 14. The client 11 is also connected to a client module 12. The client module 12 is connected to a WebSocket library 13. The WebSocket library 13 is the interface between the first device 10 and the network N.

The second device 20 comprises an application server 21 embedding a plurality of remote functions. The remote functions are executed by the application server 21. The server 21 is connected to a SOAP library. The application server 21 is also connected to a server module 22 being part of the second device 20. The server module 22 is connected to a WebSocket library 23. The WebSocket library 23 is the interface between the second device 20 and the network N.

In this first embodiment of the invention, the client 11 of the application generates a SOAP message R requesting the execution of a remote function. The message R comprises a parameter identifying the remote function to be executed, a set of parameters necessary for the execution of the remote function, and parameter indicating that the SOAP message R generated is a request for the execution of a remote function. In order to generate this message R the client 11 invokes the SOAP library 14. In the first embodiment the step E3 of the method of the invention is not executed by the client module 12 but by the client 11.

The message R generated by the client 11 is then transmitted to the client module 12.

In order to establish the communication session CS with the server module 22, the client module 12 generates a message MSG for establishing a communication session CS. The message MSG is compliant with WebSocket Protocol. The message MGS is generated by invoking the WebSocket library 13 and then sent to the server module 22.

Following the reception of the message MSG, the server module 22 generates the handshake message MSG' by invoking the WebSocket library 23. Once the message MSG is generated it is send to the module client 11 terminating the establishment of the communication session CS.

When the server module 22 receives the message R, the server module 22 transmits the request R to the server 21. The server 21 then processes the message R itself. In order to do that, the server 21 invokes the SOAP library 24. The server 21 retrieves from message R the remote function to be executed and the set of parameters necessary for the execution of the remote function.

The server 21 generates a SOAP message comprising the results of the execution of the remote function. In order to generate the message comprising the results, the server 21 invokes the SOAP library 24.

The message comprising the results is then transmitted to the server module 22 which sends it to the client module 12.

In a second embodiment of the invention represented on figure 4, the first device 10 comprises a client 11. The client 11 is the client of the application. The client 11 is connected to a client module 12. The client module 12 is connected to a SOAP library 14'.The client module 12 is also connected to a WebSocket library 13. The WebSocket library 13 is the interface between the first device 10 and the network N.

The second device 20 comprises an application server 21 embedding a plurality of remote functions. The remote functions are executed by the application server 21. The application server 21 is connected to a server module 22 being part of the second device 20. The server module is connected to a SOAP library 24'. The server module 22 is also connected to a WebSocket library 23. The WebSocket library 23 is the interface between the second device 20 and the network N.

During step E3, in order for the client module 12 to generate the request R for the execution of the remote function, the client module 12 invoke the SOAP library 14'.

In order to establish the communication session CS with the server module 22, the client module 12 generates a message MSG for establishing a communication session CS. In order to generate the message MSG, the client module invokes the WebSocket library 13.

During step E7, the server module 22 generates the handshake message MSG' invoking the WebSocket 23.

During step E14, in order to generate the SOAP message MSG1 comprising the results of the execution of the remote function, the server module 22 invokes the SOAP library 24'.

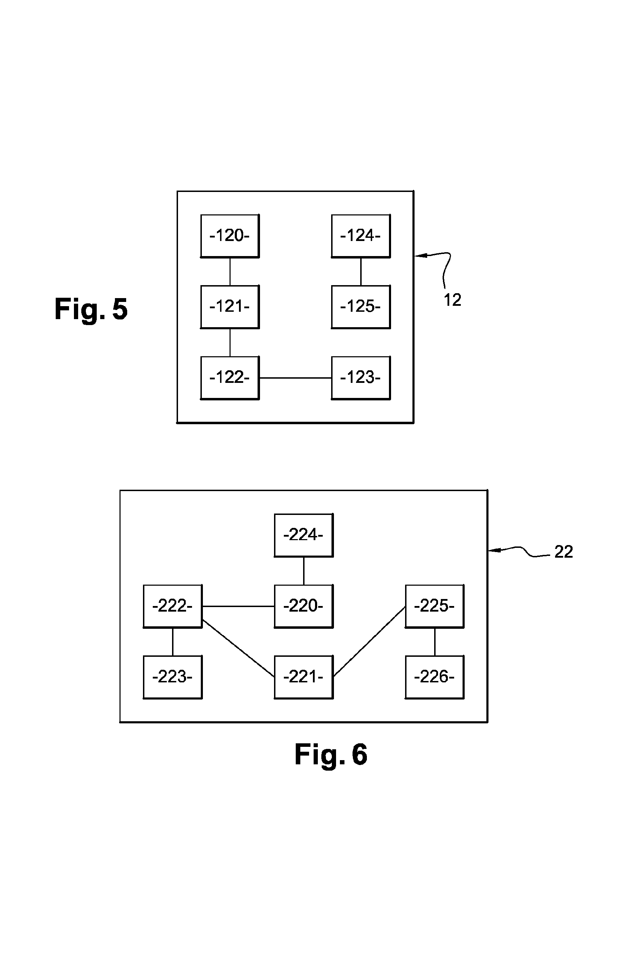

Figure 5 represents a client module 12 according to the invention. The client module 12 comprises means 120 for receiving a request asking for the execution of a remote function embedded in the second device 20, the request being sent by the client 11.

The client module 12 comprises means 121 for generating a request R for the execution of the remote function. Such a request R is compliant with SOAP. The request R comprises a parameter identifying the remote function to be executed, a set of parameters necessary for the execution of the remote function, and parameter indicating that the SOAP message R generated is a request for the execution of a remote function. The information comprised in the request R are received from the client 11. The means 121 are connected to the means 120.

The client module 12 comprises, connected to means 121, means 122 for establishing a communication session CS with the server module 22 of the second device 20 embedding the remote function to be executed.

Means 122 generates a message MSG for establishing a communication session CS. The message MSG is compliant with WebSocket Protocol.

The client module 12 comprises means 123 for sending the handshake message MSG and the request R for execution of the remote function to the server module 22. Means 123 are connected to means 122.

The client module 12 comprises means 124 for receiving the message MSG1. The client module 12 comprises, connected to the means 124, means 125 for extracting the result of the execution of the remote function from the message MSG1 and transmitting the results of the execution of the remote function to the client 11.

Figure 6 represents a server module 22 according to the invention. The server module 22 comprises means 220 for receiving the handshake message MGS and the request R.

The server module 22 comprises means 221 for sending a handshake message MSG' to the module client 11 terminating the establishment of the communication session CS.

The server module 22 comprises means 222 for creating an entry in a table T for the communication session CS. The server module 22 comprises, connected to the means 222, means 223 for storing a parameter identifying the communication session CS and the parameter indentifying the remote function to be executed in the corresponding entry of the table T. Means 222 are connected to means 220 and means 221.

The server module 22 comprises means 224 for transmitting the request for execution of the remote function and the set of parameters necessary for the execution of the remote function to the server 21. The means 224 are connected to means 220.

The server module 20 comprises means 225 for receiving the results of the execution of the remote function to the server module 22. The server module 22 comprises means 226, connected to means 225 and means 221, for generating a SOAP message MSG1 comprising the results of the execution of the remote function.

## Claims

1. A method of communication between at least a first device requesting an execution of a remote function by a second device capable of executing the remote function, the first and the second devices being part of a communication network, the method comprising the steps of :
- transmitting to the second device, a message for establishing a bidirectional communication session between the first device and the second device, the message for establishing the bidirectional communication session comprising a parameter indicating that the messages exchanged during the communication session are messages related to the execution of the remote function having a specific format,
- receiving unsolicited messages related to the execution of the remote function sent by the second device.

2. A method for controlling a communication session established between at least a first device requesting an execution of a remote function by a second device capable of executing the remote function, the first and the second devices being part of a communication network, the method comprising the steps of :
- receiving a message for establishing a bidirectional communication session between the first device and the second device, the message for establishing the bidirectional communication session comprising a parameter indicating that the messages exchanged during the communication session are messages related to the execution of the remote function having a specific format,
- storing a first parameter identifying the communication session and a second parameter identifying the remote function to be executed,
- transmitting messages related to the execution of the remote function to the first device, the first device being identified by the first and second parameters.

3. Device, being part of a communication network, requesting an execution of a remote function by another device capable of executing the remote function being part of the communication network, the device comprising :
- means for transmitting to the other device, a message for establishing a bidirectional communication session between the device and the other device, the message for establishing the bidirectional communication session comprising a parameter indicating that the messages exchanged during the communication session are messages related to the execution of the remote function having a specific format,
- means for receiving unsolicited messages related to the execution of the remote function sent by the other device.

4. Device, being part of a communication network, controlling a communication session established between the device and at least another device requesting an execution of a remote function by the device capable of executing the remote function, the device comprising:
- means for receiving a message for establishing a bidirectional communication session between the other device and the device, the message for establishing the bidirectional communication session comprising a parameter indicating that the messages exchanged during the communication session are messages related to the execution of the remote function having a specific format,
- means for storing a first parameter identifying the communication session and a second parameter identifying the remote function to be executed,
- means for transmitting messages related to the execution of the remote function to the other device, the other device being identified by the first and second parameters.

5. Communication system comprising at least a first device requesting an execution of a remote function by a second device capable of executing the remote function, the first device comprising :
- means for transmitting to the second device, a message for establishing a bidirectional communication session between the first device and the second device, the message for establishing the bidirectional communication session comprising a parameter indicating that the messages exchanged during the communication session are messages related to the execution of the remote function having a specific format,
- means for receiving unsolicited messages related to the execution of the remote function sent by the second device,
the second device comprising :
- means for receiving the message for establishing the bidirectional communication session between the first device and the second device,
- means for storing a first parameter identifying the communication session and a second parameter identifying the remote function to be executed,
- means for transmitting the messages related to the execution of the remote function to the first device, the first device being identified by the first and second parameters.

6. Computer program **characterized in that** it comprises program code instructions for the implementation of the steps of the method of communication as claimed in claim 1 when the program is executed by a processor.

7. Computer program **characterized in that** it comprises program code instructions for the implementation of the steps of the method for controlling a communication session as claimed in claim 2 when the program is executed by a processor.
